# EUROPÄISCHE PATENTSCHRIFT

(11) **EP 2 099 616 B1**
(45) Veröffentlichungstag und Bekanntmachung des Hinweises auf die Patenterteilung: **16.03.2011**
(21) Anmeldenummer: 07846845.1
(22) Anmeldetag: 27.11.2007
(51) Int. Cl.: B42D 15/00

(54) **SICHERHEITSELEMENT MIT MOTIVBILDENDER FLÜSSIGKRISTALLSCHICHT**
SECURITY ELEMENT HAVING A MOTIF-PRODUCING LIQUID CRYSTAL LAYER
ÉLÉMENT DE SÉCURITÉ COMPORTANT UNE COUCHE DE CRISTAUX LIQUIDES FORMANT UN MOTIF

(30) Priorität: 04.12.2006 DE 102006057371; 08.10.2007 DE 102007048235
(43) Veröffentlichungstag der Anmeldung: 16.09.2009
(60) Teilanmeldung: 10008899.6
(73) Patentinhaber: Giesecke & Devrient GmbH, 81677 München (DE)
(72) Erfinder: HOFFMÜLLER, Winfried, 83646 Bad Tölz (DE); BURCHARD, Theodor, 83703 Gmund (DE)
(74) Vertreter: Zeuner, Stefan
(86) Internationale Anmeldenummer: PCT/EP2007/010283
(87) Internationale Veröffentlichungsnummer: WO 2008/067932

(56) Entgegenhaltungen:
- EP-A- 1 722 255
- WO-A-03/029887
- WO-A-2005/101101
- GB-A- 2 394 718
- US-A1- 2003 178 609
- US-A1- 2006 257 586

## Beschreibung

Die Erfindung betrifft ein Sicherheitselement für Sicherheitspapiere, Wertdokumente und dergleichen mit einer Motivschicht auf Basis eines flüssigkristallinen Materials, die zumindest zwei ein Motiv bildende Bereiche mit unterschiedlicher Orientierung des flüssigkristallinen Materials und mit unterschiedlicher Polarisationswirkung aufweist. Die Erfindung betrifft ferner ein zugehöriges Herstellungsverfahren sowie ein Sicherheitspapier und einen Datenträger mit derartigen Sicherheitselementen.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen. Vielfach werden dabei die besonderen Eigenschaften von flüssigkristallinen Materialien ausgenutzt, und dabei vor allem der betrachtungswinkelabhängige Farbeindruck und/oder die lichtpolarisierende Wirkung der Flüssigkristalle.

Zur Ausrichtung wird das flüssigkristalline Material meist auf einer für die Ausrichtung von Flüssigkristallen geeigneten Trägerfolie aus Kunststoff aufgebracht. Die Trägerfolie kann auch mit einer speziellen Alignmentschicht für die Ausrichtung von Flüssigkristallen versehen sein. Als Alignmentschicht kommt beispielsweise eine Schicht aus einem linearen Photopolymer, eine fein strukturierte Schicht oder eine durch Ausübung von Scherkräften ausgerichtete Schicht infrage. Geeignete fein strukturierte Schichten können durch Prägen, Ätzen oder Einritzen hergestellt werden.

Auch das Photoaligment von Flüssigkristallschichten ist bekannt. Im Allgemeinen werden dabei Alignmentschichten aus linearen Photopolymeren eingesetzt, die durch Belichtung mit polarisiertem Licht strukturiert werden können, wie beispielsweise in der Druckschrift EP 0 611 981 A1 beschrieben. Um Flüssigkristallschichten mit Motiven auszustatten, ist es notwendig, unterschiedlich orientierte Bereiche innerhalb der Flüssigkristallschichten erzeugen zu können, wobei die bisher bekannten Verfahren alle technisch sehr aufwendig sind. Eine weitere Schwierigkeit besteht darin, dass ein gutes Alignment einerseits eine niedrige Viskosität der druckfertigen Flüssigkristall-Lösung erfordert, dass andererseits mit Drucklösungen geringer Viskosität jedoch kein kantenscharfer Druck erfolgen kann.

WO 2005/101101 A2 (= D1) beschreibt ein Sicherheitselement mit einer Folie, die zumindest eine anisotrope Polymerschicht aus einem zumindest partiell orientierten Flüssigkristall-Material aufweist. Die anisotrope Polymerschicht weist einen oder mehrere ein erstes Sicherheitsmerkmal bildende erste Bereiche auf, in denen die anisotrope Polymerschicht linear polarisierende oder die Polarisationsrichtung drehende Eigenschaften besitzt, und weist einen oder mehrere ein zweites Sicherheitsmerkmal bildende zweite Bereiche auf, in denen die anisotrope Polymerschicht zirkular polarisierende Eigenschaften besitzt.

US 2003/0178609 A1 beschreibt einen doppelbrechenden Film mit mindestens einer auf einem spiegelnden Substrat aufgebrachten doppelbrechenden Schicht aus einem Flüssigkristallmaterial, das Multidomänen bildet. In einer bevorzugten Ausführungsform weist das Flüssigkristallmaterial eine homöotrope Orientierung auf.

EP1 722 255 A1 beschreibt ein optisches Sicherungselement mit einer Folie, die eine Trägerschicht, eine Replizierschicht und eine weitere Schicht aus einem Flüssigkristall-Material aufweist. In die der Schicht aus einem Flüssigkristall-Material zugewandten Oberfläche der Replikationsschicht ist eine diffraktive Struktur zur Orientierung des Flüssigkristall-Materials eingeprägt.

GB 2 394 718 A (= D4) beschreibt einen polymeren Flüssigkristallfilm mit mindestens zwei Bereichen verschiedener Retardation, die durch unterschiedliche Polymerisationsbedingungen erzeugt sind. Ferner werden Anwendungen für Wertdokumente beschrieben.

US 2006/0257586 A1 beschreibt ein anisotropes optisches Element mit einer orientierten, cholesterischen flüssigkristallinen Schicht, die aus einem polymerisierbaren cholesterischen Flüssigkristall hergestellt ist. Eine Hauptrichtung der helicalen Achsen der flüssigkristallinen Domänen in der cholesterischen flüssigkristallinen Schicht ist in einem bestimmten Winkel mit Bezug auf die Richtung einer Normalen zur Schichtebene geneigt.

WO 03/029887 A1 beschreibt eine Ausrichtungsschicht zur Ausrichtung von flüssigkristallinem Material. Die Schicht umfasst eine erste Teilschicht und eine zweite Teilschicht, die das flüssigkristalline Material jeweils in Bereiche mit einer ersten und einer zweiten Ausrichtung ausrichten.

Ausgehend davon liegt der Erfindung die Aufgabe zugrunde, ein Sicherheitselement der eingangs genannten Art anzugeben, das die Nachteile des Stands der Technik vermeidet. Insbesondere sollen die motivbildenden Bereiche der Flüssigkristallschicht scharf begrenzte Motive darstellen können.

Diese Aufgabe wird durch das Sicherheitselement mit den Merkmalen des Hauptanspruchs gelöst. Ein zugehöriges Herstellungsverfahren sowie ein Sicherheitspapier und ein Datenträger mit einem derartigen Sicherheitselement sind in den nebengeordneten Ansprüchen angegeben. Weiterbildungen der Erfindung sind Gegenstand der Unteransprüche.

Nach der Erfindung ist bei einem gattungsgemäßen Sicherheitselement vorgesehen, dass das flüssigkristalline Material der Motivschicht in einem ersten der motivbildenden Bereiche homogen orientiert, und in einem zweiten der motivbildenden Bereiche isotrop orientiert ist, so dass das von den beiden Bereichen gebildete Motiv bei Betrachtung insbesondere durch einen Polarisator erkennbar ist. Homogene Orientierung bezeichnet dabei eine Orientierung des Direktors der Flüssigkristalle parallel zur Schichtebene, homöotrope Orientierung eine Orientierung des Direktors der Flüssigkristalle senkrecht zur Schichtebene. In isotropen Bereichen existiert keine globale Vorzugsrichtung der Flüssigkristalle.

Die motivbildenden Bereiche bilden bevorzugt ein scharf begrenztes Motiv, insbesondere scharf begrenzte Muster, Zeichen oder Codierungen.

Gemäß der vorliegenden Erfindung ist das flüssigkristalline Material der Motivschicht in dem zweiten Bereich isotrop orientiert und ist direkt über einer Anlöseschicht angeordnet, die von dem flüssigkristallinen Material angelöst wird und die Ausbildung einer flüssigkristallinen Phase in dem flüssigkristallinen Material verhindert. Die Anlöseschicht ist dabei vorzugsweise strukturiert in Form eines Negativbilds des gewünschten Motivs aufgebracht.

In einer vorteilhaften Weiterbildung der Erfindung liegt die Anlöseschicht als hochaufgelöstes Motivbild vor und das flüssigkristalline Material der Motivschicht ist vollflächig über der Anlöseschicht angeordnet. Da der optische Effekt der Flüssigkristallschicht nur in den ausgesparten Bereichen der als Negativbild gestalteten Anlöseschicht auftritt, ergibt sich insbesondere ein positives Motivbild mit dem gewünschten Flüssigkristall-Effekt (beispielsweise Farbkippeffekt, Doppelbrechung oder Polarisation). Insbesondere in Fällen, in denen die Kosten des flüssigkristallinen Materials eine Rolle spielen, ist mit Vorteil vorgesehen, dass die Anlöseschicht als hochaufgelöstes Motivbild vorliegt und das flüssigkristalline Material der Motivschicht mit niedriger Auflösung strukturiert und überlappend über der Anlöseschicht angeordnet ist. Der Überlappungsbereich wird dabei zweckmäßig so gewählt, dass die Flüssigkristallschicht im Rahmen der Passertoleranz die ausgesparten Bereiche der Anlöseschicht zuverlässig abdeckt.

Soll die flüssigkristalline Motivschicht zusammen mit der Anlöseschicht auf ein Zielsubstrat transferiert werden, weist die Anlöseschicht zweckmäßig keine gute Haftung zum Untergrund auf. Ist andererseits gewünscht, dass nur die flüssigkristalline Motivschicht transferiert wird, wird die Anlöseschicht zweckmäßig so ausgebildet, dass sie auf der Untergrundfolie verbleibt. Wird eine permanente Haftung gewünscht, so sollen beide Schichten auf der Untergrundfolie haften, was beispielsweise durch den Einsatz geeignet druckvorbehandelter Folien möglich ist.

Beim Einsatz anlösbarer Schichten kann eine mögliche Verunreinigung der flüssigkristallinen Lösung im Druckwerk beispielsweise durch die Verwendung von solchen Beschichtungsverfahren vermieden werden, die eine Rückverunreinigung ausschließen, wie etwa Curtain Coating. Möglich sind auch Sonderkonstruktionen klassischer Druckverfahren, bei denen zumindest ein Teil der "druckenden Kette" beispielsweise mit einem geeigneten Lösungsmittel permanent gereinigt wird. Nach einer besonders einfachen Lösung wird das übliche Volumen des Druckwerks bzw. des Vorratsbehälters verringert, so dass sich die Kontamination auf ein kleines Flüssigkristallvolumen bezieht und ein permanentes oder batchartiges Ausschleusen kontaminierter Lösung wirtschaftlich möglich ist.

Die flüssigkristalline Motivschicht ist bevorzugt mit einem metallischen Reflektor kombiniert, der beispielsweise durch eine metallisierte Kunststofffolie gebildet sein kann. Der metallische Reflektor kann auch eine Beugungsstruktur, insbesondere ein Hologramm, umfassen.

In dem ersten Bereich ist das flüssigkristalline Material der Motivschicht mit Vorteil direkt über einer Kunststoff-Trägerfolie angeordnet, die eine Ausrichtungsschicht für das flüssigkristalline Material bildet.

Gemäß einer vorteilhaften Weiterbildung der Erfindung weist die Motivschicht einen dritten Bereich auf, in dem das flüssigkristalline Material ebenfalls homogen, aber unter einem Winkel zur Ausrichtung des ersten Bereichs orientiert ist und eine zum ersten Bereich unterschiedliche Polarisationswirkung aufweist. In diesem dritten Bereich ist das flüssigkristalline Material mit Vorteil direkt über einer Ausrichtungsschicht angeordnet, die aus einem linearen Photopolymer, einer fein strukturierten Schicht oder einer durch Ausübung von Scherkräften ausgerichteten Schicht gebildet ist. Es versteht sich, dass zur Darstellung komplexerer Motive weitere Bereiche mit unterschiedlicher Orientierung der Flüssigkristalle vorgesehen sein können.

In bevorzugten Ausgestaltungen der Erfindung ist die Motivschicht auf Basis eines nematischen flüssigkristallinen Materials gebildet. Die nematische flüssigkristalline Motivschicht kann dann mit Vorteil mit einer cholesterischen Flüssigkristallschicht kombiniert sein.

In anderen ebenfalls vorteilhaften Ausgestaltungen der Erfindung ist die Motivschicht auf Basis eines cholesterischen flüssigkristallinen Materials gebildet. Isotrope Bereiche der flüssigkristallinen Motivschicht sind in diesem Fall nicht nur mit einem Zirkularpolarisator, sondern auch mit bloßem Auge, insbesondere als farblose Bereiche, zu erkennen.

Die Erfindung enthält auch ein Verfahren zur Herstellung eines Sicherheitselements für Sicherheitspapiere, Wertdokumente und dergleichen, bei dem
- auf eine Trägerfolie eine Motivschicht auf Basis eines flüssigkristallinen Materials aufgebracht wird, wobei das flüssigkristalline Material in zumindest zwei, ein Motiv bildenden Bereichen mit unterschiedlicher Orientierung erzeugt wird, wobei
- das flüssigkristalline Material der Motivschicht in einem ersten der motivbildenden Bereiche mit homogener Orientierung erzeugt wird, und in einem zweiten der motivbildenden Bereiche mit isotroper Orientierung erzeugt wird.

In dem ersten Bereich wird das flüssigkristalline Material der Motivschicht mit Vorteil direkt auf die Trägerfolie aufgebracht, wobei die Trägerfolie eine Ausrichtungsschicht für eine homogene Ausrichtung des flüssigkristallinen Materials bildet.

In dem zweiten Bereich kann das Aufbringen eines die Ausbildung einer nematischen Phase verhindernden Störstoffs, wie etwa eines leicht löslichen Lacks, auf die Trägerfolie in Betracht kammen. Durch die Vermischung der Flüssigkristall-Lösung mit dem Bindemittel des Lacks bzw. allgemein durch die Wechselwirkung mit dem Störstoff stellt sich in diesem Fall im zweiten Bereich eine isotrope Phase ein.

In einem dritten Bereich kann eine weitere Ausrichtungsschicht zur homogenen Orientierung des Flüssigkristallmaterials auf die Trägerfolie aufgebracht werden, wobei das flüssigkristalline Material in dem dritten Bereich direkt auf die weitere Ausrichtungsschicht aufgebracht wird.

Je nach Anwendung kann die Trägerfolie in manchen Ausgestaltungen im fertigen Sicherheitselement verbleiben, beispielsweise bei Abdeckfolien für Banknoten mit einer durchgehenden Öffnung. Bei anderen Ausgestaltungen ist es dagegen von Vorteil, wenn die Trägerfolie, gegebenenfalls zusammen mit der anorganischen Ausrichtungsschicht, von dem Sicherheitselement abgezogen wird. Die verbleibende Schichtenfolge kann dann in bekannter Weise weiterverarbeitet werden, beispielsweise auf einen Sicherheitsfadenaufbau aufkaschiert werden.

Die Erfindung umfasst auch ein Sicherheitspapier für die Herstellung von Wertdokumenten oder dergleichen sowie ein Wertdokument, wie eine Banknote, eine Ausweiskarte oder dergleichen, wobei Sicherheitspapier bzw. Wertdokument mit einem Sicherheitselement der oben beschriebenen Art ausgestattet sind.

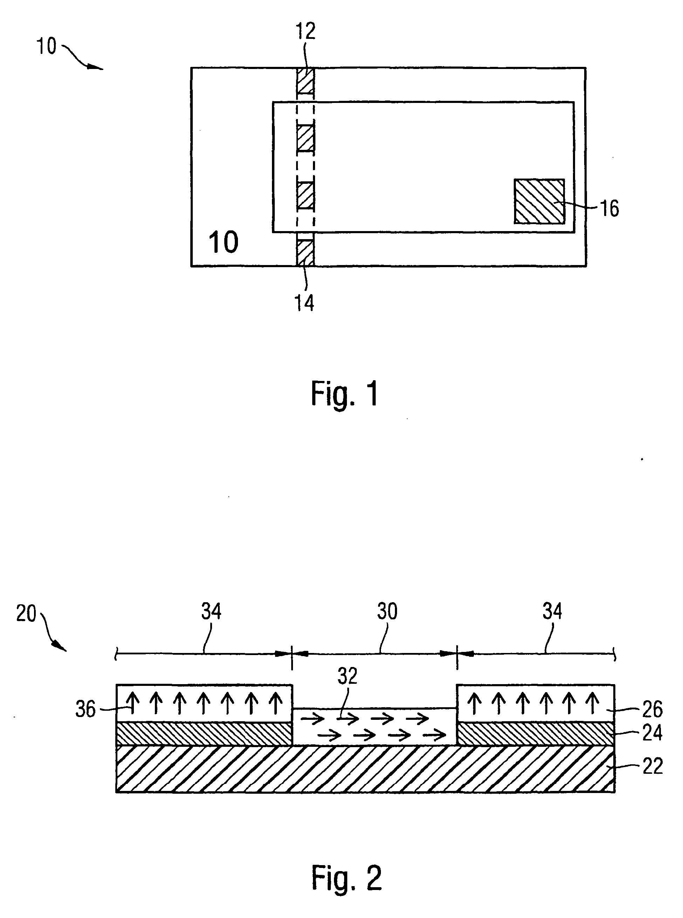

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet. Die in Figuren 2 bis 10 gezeigten Ausführungs beispiele fallen nicht unter den Schutzumfang.

Es zeigen:
- Fig.1: eine schematische Darstellung einer Banknote mit einem ein- gebetteten Sicherheitsfaden und einem aufgeklebten Transfer- element,
- Fig. 2 bis 4: Querschnitte des Aufbaus eines Sicherheitselements in verschiede- nen Stadien des Herstellungsvorgangs,
- Fig. 5: ein Sicherheitselement , bei dem die Schichtenfolge der Fig. 2 auf eine Hologrammstruktur übertragen ist,
- Fig. 6: das Sicherheitselement der Fig. 5 nach Abziehen der Trägerfo- lie zusammen mit der metallischen Ausrichtungsschicht,
- Fig. 7: ein Sicherheitselement in Gestalt eines metallisierten Hologrammstreifens,
- Fig. 8: einen Grundaufbau wie in Fig. 2, bei dem die Motivschicht zusätzlich einen dritten Bereich mit unterschiedlicher Orien- tierung der Flüssigkristalle aufweist
- Fig. 9 und 10: Sicherheitselemente , bei denen die nematische Motivschicht mit einer cholesterischen Flüssigkristallschicht kombiniert ist,
- Fig. 11: in (a) und (b) Zwischenschritte bei der Herstellung einer Fig. 2 entsprechenden Grundstruktur mit Bereichen mit klarer isotroper Phase,
- Fig. 12: eine weitere Grundstruktur wie in Fig. 2 und 11(b) mit Berei- chen mit klarer isotroper Phase,
- Fig. 13: ein weiteres Ausführungsbeispiel der Erfindung, das den Ein- satz cholesterischer Flüssigkristallschichten veranschaulicht, und
- Fig. 14: in (a) einen Querschnitt und in (b) eine Aufsicht auf ein Aus- führungsbeispiel mit einer hochaufgelösten strukturierten An- löseschicht und mit einer niedrigaufgelösten strukturierten Flüssigkristallschicht.

Die Erfindung wird nun am Beispiel von Sicherheitselementen für Banknoten erläutert. Fig.1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie ausgebildet sein, die über einem Fensterbereich oder einer durchgehenden Öffnung der Banknote angeordnet ist.

Der Aufbau eines Sicherheitselements 20 wird nun anhand der Querschnitte der Figuren 2 bis 4 näher erläutert. Als Basis des Sicherheitselements 20 dient eine hochwertige gereckte PET-Trägerfolie 22, auf die eine dünne Aluminiumschicht 24 in Form eines gewünschten Motivs aufgebracht ist.

Die diskontinuierliche Aluminiumschicht 24 kann mithilfe eines Ätzverfahrens oder eines Waschverfahrens in einem PVD-Prozess erzeugt werden. Bei Einsatz eines Waschverfahrens werden vor der Metallbedampfung lösliche Waschfarben aufgedruckt, die nach der Bedampfung zusammen mit den darauf abgeschiedenen Substanzen der PVD-Schicht ohne chemische Veränderung abgewaschen werden. Bei Einsatz eines Ätzverfahrens wird zunächst der PVD-Beschichtungsprozess durchgeführt, anschließend ein Resistlack gedruckt und strukturiert. In den ungeschützten Stellen wird die PVD-Schicht dann durch ein Ätzmittel entfernt. Der übrige Resistlack kann auf der PVD-Schicht verbleiben oder durch den Einsatz geeigneter Lösungsmittel entfernt werden.

In einem weiteren Verfahrensschritt wird die metallbeschichtete Trägerfolie 22, 24 vollflächig mit einer nematischen Flüssigkristallschicht 26 versehen, wobei sich das aufgebrachte flüssigkristalline Material je nach den Vorgaben des jeweiligen Untergrunds lokal unterschiedlich ausrichtet.

In einem ersten Bereich 30, in dem das flüssigkristalline Material direkt auf die Trägerfolie 22 aufgebracht ist, erzeugt die hochwertige gereckte Trägerfolie 22 eine homogene Ausrichtung 32 der Flüssigkristallschicht 26, also eine Ausrichtung der Flüssigkristalle parallel zur Oberfläche der Trägerfolie 22.

In einem zweiten Bereich 34, in dem das flüssigkristalline Material auf der Aluminiumschicht 24 angeordnet ist, orientieren sich die Flüssigkristalle homöotrop, also mit ihrem Direktor im Wesentlichen senkrecht zur Oberfläche der Trägerfolie, wie durch die Ausrichtungspfeile 36 in Fig. 2 angedeutet.

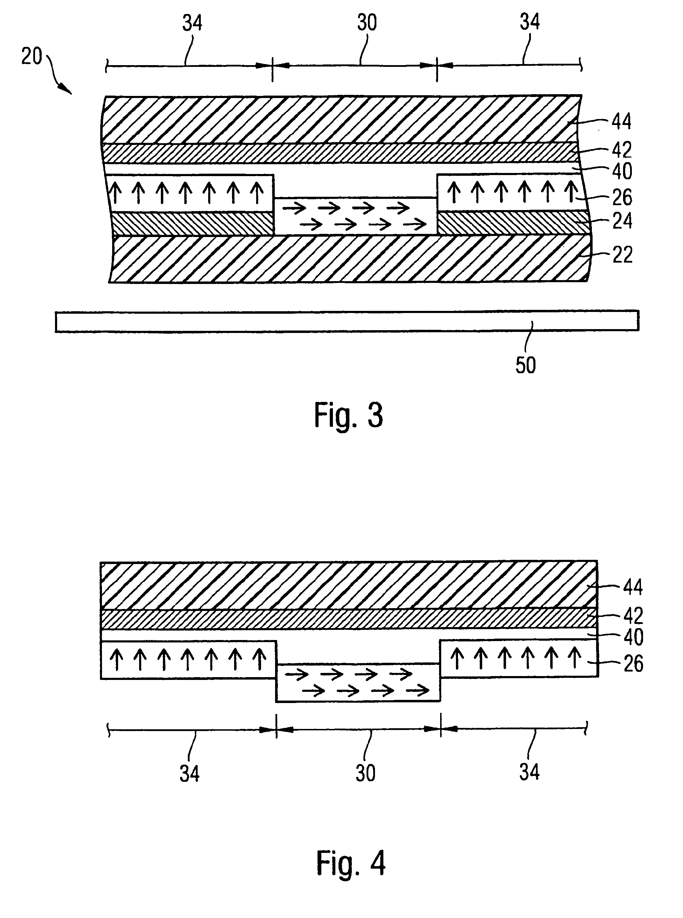

Die so erhaltenen Ausrichtungen werden dann durch UV-Bestrahlung und Vernetzung der Flüssigkristallschicht 26 fixiert. Um die unterschiedlichen Ausrichtungen der Flüssigkristalle auch visuell erkennbar zu machen, wird das Element noch mit einem metallischen Reflektor versehen. Dazu kann die Schichtenfolge der Fig. 2 beispielsweise über eine Kaschierlackschicht 40 auf eine mit einer Metallisierung 42 versehene PET-Folie 44 auflaminiert werden, wie in Fig. 3 dargestellt.

Jetzt kann das Motiv der Flüssigkristallschicht durch Betrachtung des Sicherheitselements 20 mit einem linearen Polarisationsfilter 50 sichtbar gemacht werden. Aufgrund der wellenlängenabhängigen optischen Anisotropie der PET-Trägerfolie 22 ist beim Betrachten der zweiten Bereiche 34 durch einen Polarisationsfilter 50 hindurch und Drehen desselben ein Hell-Dunkel-Kontrast in Verbindung mit einem Farbspiel zu erkennen.

In den ersten Bereichen 30 ohne Aluminiumschicht 24 ist der optischen Anisotropie der PET-Folie 22 die optische Anisotropie der Flüssigkristallschicht 26 überlagert. In diesen Bereichen tritt ebenfalls ein Hell-Dunkel-Kontrast in Verbindung mit einem Farbspiel auf, wobei durch geeignete Abstimmung von Trägerfolie 22 und Schichtdicke der Flüssigkristallschicht 26 ein hoher Kontrast zwischen dem Erscheinungsbild der ersten und zweiten Bereiche 30 bzw. 34 erzeugt werden kann. Bei einer bestimmten Stellung des Polarisationsfilters 50 erscheinen die ersten Bereiche 30 dann hell, die zweiten Bereiche 34 dagegen dunkel, so dass das Motiv der Flüssigkristallschicht 26 deutlich hervortritt. Beim Drehen des Polarisationsfilters 50 ändern sich die relativen Helligkeiten und kehren sich bei einer Drehung um 90° gerade um, so dass die ersten Bereiche 30 dann dunkel und die zweiten Bereiche 34 hell erscheinen.

Ein besonderer Vorteil der beschriebenen Gestaltung besteht darin, dass sehr scharf begrenzte Motive in der Flüssigkristall-Motivschicht 26 erzeugt werden können, da die Auflösung des polarisierenden Motivs nicht mehr durch die Druckgenauigkeit, sondern durch die Genauigkeit der Strukturierung der Aluminiumschicht 24 bestimmt ist. Darüber hinaus weisen die auf der PET-Folie 22 ausgerichteten Flüssigkristalle eine hohe Transparenz auf und beeinträchtigen den Glanz einer Metallisierung daher nur wenig. Die umgebenden Bereiche der Flüssigkristalle zeigen durch die Anisotropie der PET-Folie 22 einen Hell-Dunkel-Kontrast, der dem Kontrast der Flüssigkristalle gegenläufig ausgeführt sein kann und daher die Deutlichkeit bei Betrachtung mit dem Polarisationsfilter weiter erhöht.

Ausgehend von der Situation der Fig. 3 kann zur Weiterverarbeitung bei geeigneter Einstellung der Haftungsverhältnisse die PET-Trägerfolie 22 zusammen mit der Aluminiumschicht 24 abgezogen werden, wie in Fig. 4 dargestellt. Diese Schichtenfolge kann bei entsprechender heißsiegelfähiger Ausstattung beispielsweise den zentralen Bestandteil eines Sicherheitsfadens, wie etwa des Sicherheitsfadens 12, bilden.

Nach Entfernung der Trägerfolie 22 zeigen die homogen ausgerichteten Flüssigkristalle im ersten Bereich 30 bei Betrachtung durch einen Polarisationsfilter 50 und Drehen desselben einen Grau-Dunkel-Kontrast, wobei die jeweils wahrgenommene Helligkeit davon abhängt, ob die Polarisationsebene des durch die Flüssigkristalle beeinflussten Lichts vorwiegend parallel oder senkrecht zur Durchlassrichtung des Polarisationsfilters 50 vorliegt. Im zweiten Bereich 34 zeigen die Flüssigkristalle einen einheitlichen Grauton, der sich beim Drehen des Polarisationsfilters 50 nicht oder nur wenig verändert, da diese Flüssigkristalle aufgrund ihrer homöotropen Ausrichtung keine Direktorkomponente in der Ebene der Motivschicht haben.

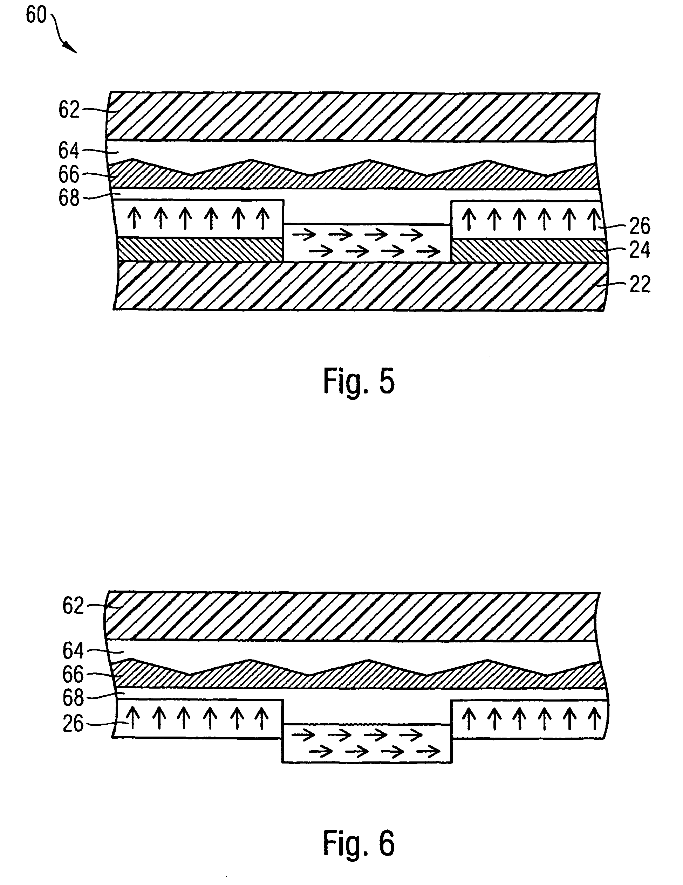

Wie in Fig. 5 gezeigt, kann die Schichtenfolge der Fig. 2 auch auf eine Hologrammstruktur übertragen werden. Das Sicherheitselement 60 enthält dann eine Trägerfolie 22 mit einer Ausrichtungsschicht 24 aus Aluminium, eine flüssigkristalline Motivschicht 26 mit zumindest zwei ein Motiv bildenden Bereichen mit unterschiedlicher Orientierung des Flüssigkristallmaterials sowie eine zweite Trägerfolie 62, die eine Prägelackschicht 64 mit einer Hologrammprägung und eine Hologrammmetallisierung 66 enthält. Die beiden Teilelemente sind durch eine Kaschierlackschicht 68 verbunden.

Die erste Trägerfolie 22 mit der Ausrichtungsschicht 24 kann für die Weiterverarbeitung, etwa zur Erzeugung eines Hologrammfadens, abgezogen werden, wie in Fig. 6 gezeigt. In diesem Fall ist das Hologramm zweckmäßig verankert.

Anstelle einer Aluminiumschicht 24 kann auch ein für UV-Strahlung durchlässiges Material, wie etwa Al₂O₃, für die Ausrichtungsschicht zur Erzeugung der homöotrop orientierten Bereiche eingesetzt werden und mit dieser eine Schichtenfolge analog zu der in Fig. 2 gezeigten Ausgestaltung erzeugt werden.

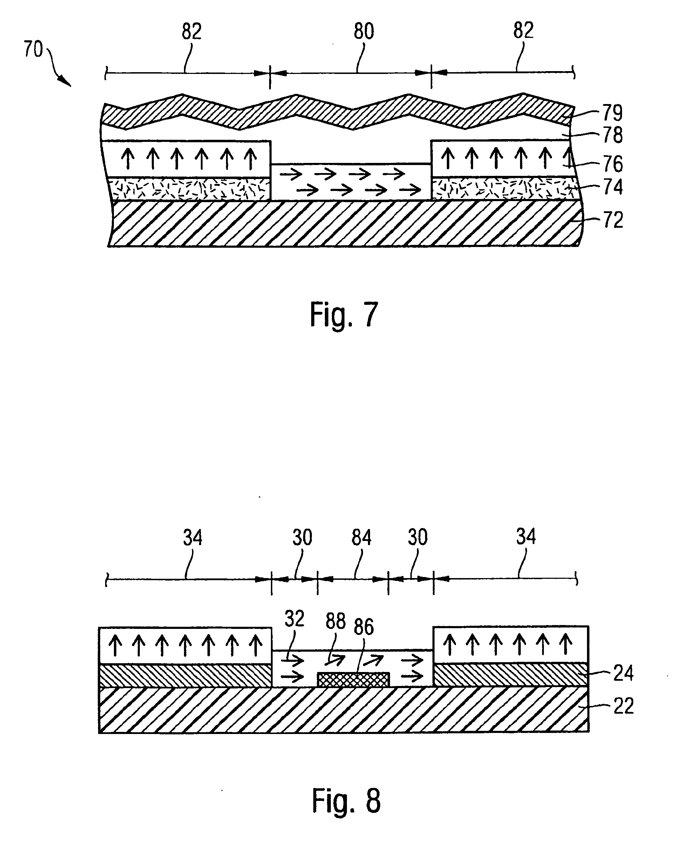

Neben den bereits beschriebenen Möglichkeiten der Weiterverarbeitung kann dann beispielsweise auch die in Fig. 7 illustrierte Weiterverarbeitung zu einem metallisierten Hologrammstreifen erfolgen. Bei dem Sicherheitselement 70 ist auf eine hochwertige gereckte PET-Trägerfolie 72 eine dünne Schicht 74 aus Aluminiumoxid in Form des gewünschten Motivs aufgebracht. Herstellung und Strukturierung der Al₂O₃-Schicht 74 kann, wie oben beschrieben, mit einem PVD-Verfahren in Verbindung mit einem Waschoder Ätzverfahren erfolgen.

Die Al₂O₃-beschichtete Trägerfolie 72, 74 wird vollflächig mit nematischen Flüssigkristallen 76 beschichtet, die sich in ersten Bereichen 80 homogen orientieren und in den durch die Al₂O₃-Schicht 74 definierten zweiten Bereichen 82 homöotrop orientieren. Auf die erhaltene Schichtenfolge wird ein UV-Lack 78 aufgebracht, mit einer Hologrammprägung versehen und anschließend metallisiert 79. Nach einer heißsiegelfähigen Ausstattung kann das in Fig. 7 gezeigte Element wie ein herkömmlicher metallisierter Hologrammstreifen verarbeitet werden.

Nach Abziehen der Trägerfolie 72 und gegebenenfalls der Al₂O₃-Schicht 74 erscheinen die zweiten Bereiche 82 bei Betrachtung durch einen Polarisationsfilter und Drehen desselben in einheitlichem Grau, während die ersten Bereiche 80 entsprechend der relativen Orientierung von Flüssigkristallen und Polfilter einen Grau-Dunkel-Kontrast zeigen.

Soll die Trägerfolie 72 im fertigen Sicherheitselement verbleiben, etwa bei der Anwendung als Abdeckfolie für Banknoten mit durchgehenden Öffnungen, wird die Al₂O₃-Schicht 74 ebenso wie die Flüssigkristallschicht 76 auf der Trägerfolie ausreichend verankert. Dies kann beispielsweise durch geeignete Wahl der Vernetzungsbedingungen der nematischen Flüssigkristallschicht erreicht werden.

In allen beschriebenen Ausgestaltungen kann die Flüssigkristall-Motivschicht einen dritten Bereich mit einer zum ersten und zweiten Bereich unterschiedlichen Orientierung der Flüssigkristalle aufweisen. Dazu wird, wie in Fig. 8 gezeigt, in einem dritten Bereich 84 eine weitere Ausrichtungsschicht 86 zur homogenen Orientierung des Flüssigkristallmaterials auf die Trägerfolie 22 aufgebracht. Als Ausrichtungsschicht 86 kann dabei insbesondere eine Schicht aus einem linearen Photopolymer, eine fein strukturierte Schicht oder eine durch Ausübung von Scherkräften ausgerichtete Schicht eingesetzt werden.

Nach Aufbringen der flüssigkristallinen Motivschicht 26 orientieren sich die Flüssigkristalle im dritten Bereich 84 wie im ersten Bereich 30 homogen, aber entsprechend der Vorgabe der Ausrichtungsschicht 86 und nicht, wie im ersten Bereich 30, entsprechend der Vorgabe der Trägerfolie 22. Die gedrehten Ausrichtungspfeile 88 der Fig. 8 sollen dabei eine von der Orientierung 32 des ersten Bereichs verschiedene homogene Orientierung andeuten, nicht eine teilweise senkrecht zur Schichtebene orientierte Ausrichtung. Insbesondere kann die Orientierung 88 der Flüssigkristalle im dritten Bereich 84 parallel zur Schichtebene und senkrecht zur Orientierung 32 der Flüssigkristalle im ersten Bereich 30, in Fig. 8 also senkrecht zur Papierebene gewählt sein.

Durch die zusätzlichen Bereiche 84 lassen sich scharf abgegrenzte polarisierende Motive erzeugen, die zwei sich bei Drehung eines aufgelegten Polarisators verändernde Motivbereiche 30 und 84 enthalten sowie einen inaktiven Bereich 34, dessen Helligkeitswert sich bei Drehung des Polarisators nicht ändert.

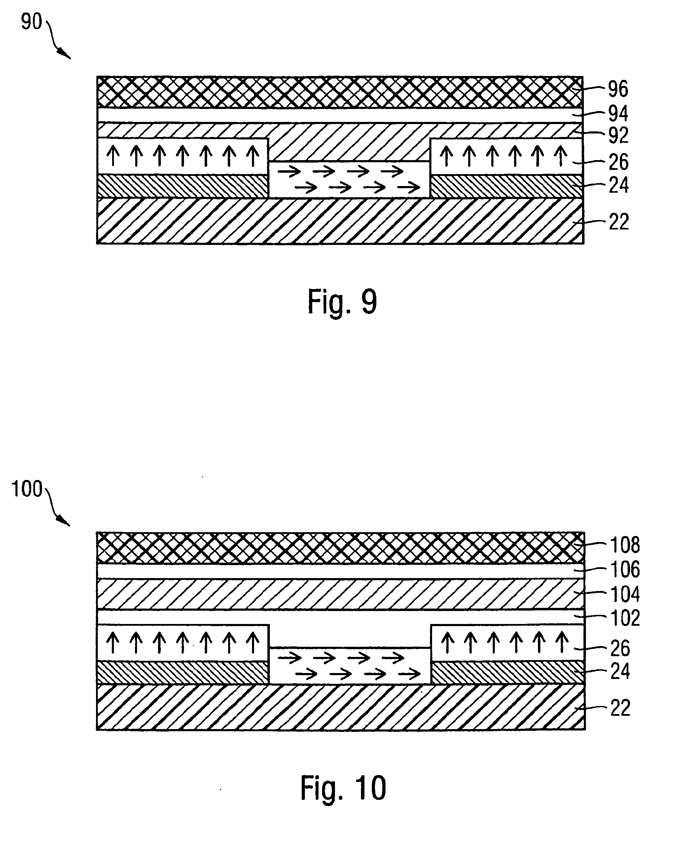

In weiteren Ausführungsbeispielen ist die nematische Motivschicht mit einer cholesterischen Flüssigkristallschicht kombiniert. Beispielsweise zeigt Fig. 9 ein Sicherheitselement 90 mit einem Grundaufbau wie in Fig. 2, wobei auf die nematische Motivschicht 26 zusätzlich eine vollflächige cholesterische Flüssigkristallschicht 92 aufgebracht ist. Die so entstandene Schichtenfolge ist auf einen absorbierenden Untergrund 96 aufgebracht und mittels Kaschierkleber 94 mit diesem verbunden.

Nach dem Entfernen der Trägerfolie 22 kann das Element bei der in Fig. 9 gezeigten Orientierung von unten durch die unterschiedliche Polarisationswirkung verifiziert werden. Wird anstelle einer metallischen Ausrichtungsschicht 24 eine für die homöotrope Ausrichtung der Flüssigkristalle geeignete transparente Ausrichtungsschicht eingesetzt, wie beispielsweise die oben erwähnte Aluminiumoxidschicht, so kann die Trägerfolie 22 auch in dem Sicherheitselement 90 verbleiben.

Hat die nematische Flüssigkristallschicht 26 des in Fig. 9 gezeigten Elements im homogen orientierten Bereich eine Verzögerungswirkung von mehr als λ/4, vorzugsweise von etwa λ/2, so tritt das Motiv der Flüssigkristallschicht 26 bei Betrachtung mit einem zirkularen Polarisationsfilter deutlich sichtbar in Erscheinung.

Anstatt die cholesterische Flüssigkristallschicht direkt auf der nematischen Motivschicht aufzubringen, kann der Grundaufbau der Fig. 2 auch auf einen Schichtaufbau mit einer cholesterischen Flüssigkristallschicht aufkaschiert werden, wie in Fig. 10 gezeigt. Bei dem entstehenden Sicherheitselement 100 ist der Grundaufbau 22, 24, 26 über eine Kaschierkleberschicht 102 mit einer cholesterischen Flüssigkristallschicht 104 und über eine weitere Kaschierkleberschicht 106 mit einer absorbierenden Untergrundschicht 108 verbunden.

Die absorbierende Untergrundschicht 108 beinhaltet im Ausführungsbeispiel einen farbkippenden Fadenaufbau mit einer Trägerfolie, eventuellen Deckweißschichten, einer Metallisierung, einer Magnetschicht und der eigentlich absorbierenden Farbschicht. Nach Entfernen der Trägerschicht 22 mit der metallischen Ausrichtungsschicht 24 kann das in der Nematenschicht 26 codierte Motiv sichtbar gemacht werden. Auch bei dieser Gestaltung kann die Trägerfolie 22 im fertigen Sicherheitselement verbleiben, wenn als Ausrichtungsschicht 24 eine transparente Schicht eingesetzt wird. Die optische Anisotropie der Gesamtanordnung ist dann durch die Anisotropie der Trägerfolie und die Anisotropie der Flüssigkristallschichten bestimmt.

Die bisher beschriebenen Ausführungsbeispiele, die nicht teil der Erfindung sind, weisen jeweils inaktive Bereiche auf, deren Erscheinungsbild sich aufgrund der homöotropen Orientierung der Flüssigkristalle beim Drehen eines aufgelegten Polarisationsfilters praktisch nicht verändert. Dieser Effekt lässt sich alternativ auch durch eine lokale Unterdrückung der flüssigkristallinen Phase der Motivschicht erreichen.

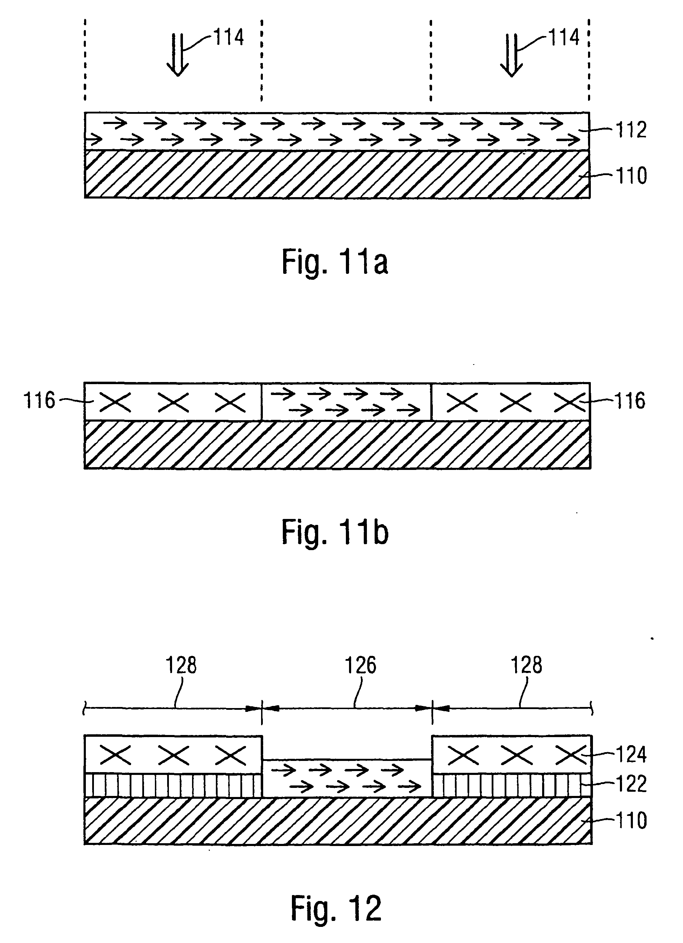

Bei einer ersten, mit Bezug auf Fig. 11 illustrierten Ausgestaltung wird auf eine hochwertige gereckte PET-Trägerfolie 110 zunächst vollflächig eine Flüssigkristall-Motivschicht 112 aufgebracht, wie in Fig. 11(a) gezeigt. Vor der Vernetzung der Flüssigkristalle wird die Motivschicht 112 lokal erhitzt, beispielsweise durch motivtragende Heizwalzen, durch Laserbestrahlung oder durch Bestrahlung mit IR-Strahlung durch eine Motivmaske. Die lokale Erhitzung 114 führt in der Regel zunächst zur Entstehung einer getrübten Schmelze, bis oberhalb einer bestimmten Schwelltemperatur die Trübung verschwindet und ein Übergang in eine klare, isotrope Phase 116 erfolgt, wie in Fig. 11(b) gezeigt. Die isotrope Phase bedeutet dabei ein Fehlen einer globalen Vorzugsrichtung im Material und ist in der Figur durch Kreuze veranschaulicht.

Diese klaren Bereiche 116 mit der isotropen Flüssigkristallphase bilden nun, wie auch die zweiten Bereiche der Figuren 2 bis 10, inaktive Bereiche, deren Erscheinungsbild sich beim Drehen eines aufgelegten Polarisationsfilters nicht verändert. Die Grundstruktur der Fig. 11(b) kann daher analog zur Grundstruktur der Fig. 2 weiterverarbeitet werden.

Eine weitere Möglichkeit, die flüssigkristalline Phase der Motivschicht lokal zu unterdrücken, ist in Fig. 12 dargestellt. Bei dem dort gezeigten Ausführungsbeispiel ist zunächst ein leicht löslicher Lack 122 in Form des gewünschten Motivs auf die PET-Trägerfolie 110 aufgebracht, so dass erste Bereiche 126 ohne und zweite Bereiche 128 mit Lackschicht entstehen. Die Trägerfolie 110 und die Lackschicht 122 werden dann vollflächig mit einer nematischen Flüssigkristall-Lösung 124 überdruckt. Diese löst in den zweiten Bereichen die Lackschicht 122 sofort an, so dass durch die Vermischung mit dem Bindemittel die Ausbildung einer flüssigkristallinen Phase verhindert wird.

Auf diese Weise entsteht ein Sicherheitselement mit einem ersten Bereich 126 mit einer homogen ausgerichteten Flüssigkristallschicht und einem zweiten Bereich 128 mit einer isotropen Phase. Auch dieses Element kann analog zur Grundstruktur der Figuren 2 und 11(b) weiterverarbeitet werden.

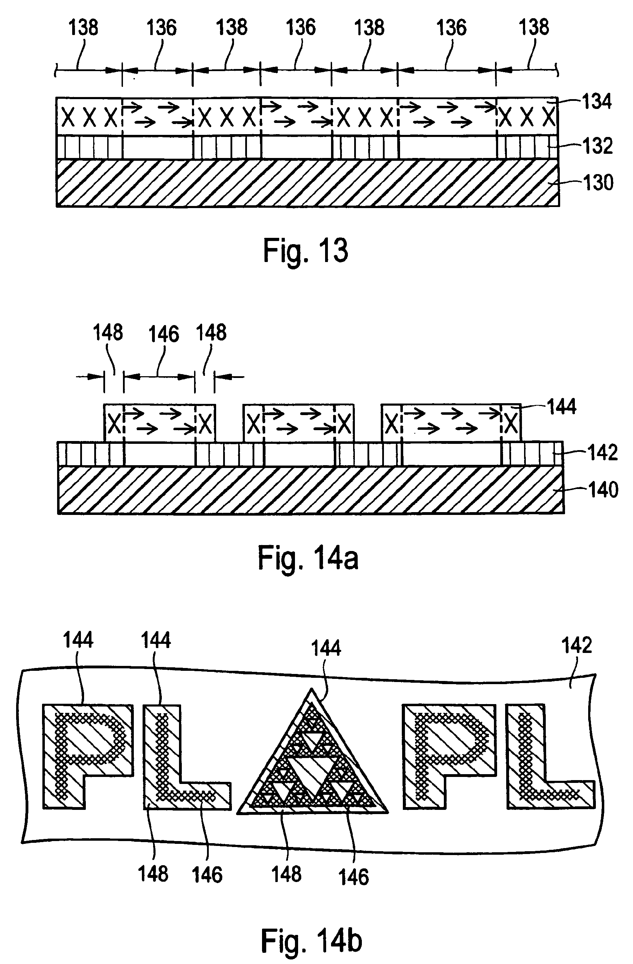

Weitere Ausführungsbeispiele der Erfindung, die den Einsatz cholesterischer Flüssigkristallschichten veranschaulichen, sind in den Figuren 13 und 14 dargestellt.

Mit Bezug zunächst auf Fig. 13 ist auf eine Trägerfolie 130 eine Anlöseschicht 132 strukturiert in Form eines Negativbilds des gewünschten Motivs aufgebracht, so dass erste Bereiche 136 ohne und zweite Bereiche 138 mit Anlöseschicht entstehen. Die Trägerfolie 130 und die Anlöseschicht 132 sind vollflächig mit einer cholesterischen Flüssigkristall-Lösung überdruckt, um eine flüssigkristalline Motivschicht 134 zu bilden. Die Darstellung der Fig. 13 ist selbstverständlich nur schematisch, da insbesondere die Flüssigkristallbereiche, die nicht direkt über der Anlöseschicht 132 liegen, in der Regel etwas tiefer liegen werden als ihre Umgebung, da die aufgetragene Menge an flüssigkristallinem Material im Idealfall im ganzen Flüssigkristalldruckbild gleichmäßig ist.

Das Lösungsmittel in der flüssigkristallinen Formulierung 134 löst dabei die Anlöseschicht 132 sehr schnell an, wodurch die flüssigkristalline Formulierung in den zweiten Bereichen 138 durch Material aus der Anlöseschicht 132 verunreinigt wird und sich dort keine flüssigkristalline Phase ausbilden kann, wie in Fig. 13 durch die Kreuze in der Flüssigkristallschicht 134 angedeutet ist.

Flüssigkristalline Schichten, die aus lösungsmittelhaltiger Formulierung hergestellt werden, können im Allgemeinen nur schwer in hoher Auflösung aufgebracht werden, da erhebliche Nassfilmdicken gedruckt werden müssten, die aufgrund der niedrigen Viskosität der Formulierungen einen erheblichen Verlauf zeigen. Zugabe von Verdickern führt in der Regel zu einem Qualitätsverlust bei den optischen Eigenschaften der Flüssigkristallschichten. Dagegen lässt sich die Anlöseschicht 132 auch in der gewünschten hohen Auflösung gut auf die Trägerfolie 130 aufbringen. Da die darübergedruckte Flüssigkristallschicht 134 nur in den ausgesparten ersten Bereichen 136 der Anlöseschicht eine flüssigkristalline Phase ausbilden kann und daher nur dort die gewünschte optische Wirkung zeigt, wird die Anlöseschicht 132 als Negativbild des darzustellenden Motivs aufgedruckt.

Wesentliche Teile der Anlöseschicht sind in einem Teil der Lösungsmittel, die die flüssigkristalline Formulierung enthält, zumindest teilweise löslich oder zumindest stark anquellbar. Als Material für die Anlöseschicht kann beispielsweise UCAR™ VMCH eingesetzt werden, ein Vinylchlorid Copolymer mit Maleinsäuregruppe, das von der Dow Chemical Company bezogen werden kann.

Insbesondere bei großen Auflagen, bei denen die Kosten des flüssigkristallinen Materials stärker ins Gewicht fallen, kann es sich empfehlen, die Flüssigkristallschicht 134 nicht, wie bei dem Ausführungsbeispiel der Fig. 13, vollflächig aufzubringen, sondern nur in denjenigen Bereichen, in denen ein Effekt möglich ist, also in der Umgebung ausgesparter Bereiche der Anlöseschicht.

Hierzu ist bei dem in Fig. 14(a) im Querschnitt und in Fig. 14(b) in Aufsicht gezeigten Ausführungsbeispiel auf eine Trägerfolie 140 zunächst eine Anlöseschicht 142 strukturiert in Form eines hochaufgelösten Negativbilds des gewünschten Motivs aufgebracht. Die ausgesparten Bereiche 146 ohne Anlöseschicht sind dabei in Fig. 14(b) der besseren Erkennbarkeit halber mit Kreuzschraffuren dargestellt. Die Trägerfolie 140 und die Anlöseschicht 142 sind weiter mit einer cholesterischen Flüssigkristall-Lösung 144 überdruckt, die mit niedriger Auflösung strukturiert und überlappend über der Anlöseschicht 142 angeordnet ist.

Da ein optischer Effekt nur in den ausgesparten Bereichen 146 ohne Anlöseschicht 142 möglich ist, ergibt sich dasselbe visuelle Erscheinungsbild wie bei vollflächiger Bedeckung mit flüssigkristallinem Material. Der Überlappungsbereich 148 wird dabei so gewählt, dass die Flüssigkristallschicht 144 im Rahmen der Passertoleranz die ausgesparten Bereiche 146 zuverlässig abdeckt. Die Auflösung des flüssigkristallinen Effektbereichs wird durch diese Vorgehensweise von der hohen Auflösung der aufgedruckten Anlöseschicht 142 bestimmt. Die Flüssigkristallschicht 144 kann dadurch mit niedriger Auflösung aufgebracht werden und der Bedarf an flüssigkristallinem Material ist nur wenig größer als durch die Fläche des gewünschten Motivs vorgegeben. Bei dem gewünschten Flüssigkristall-Effekt kann es sich beispielsweise um einen Farbkippeffekt, Doppelbrechung, einen Polarisationseffekt oder dergleichen handeln.

## Patentansprüche

1. Sicherheitselement für Sicherheitspapiere, Wertdokumente und dergleichen mit einer Motivschicht auf Basis eines flüssigkristallinen Materials, die zumindest zwei ein Motiv bildende Bereiche mit unterschiedlicher Orientierung des flüssigkristallinen Materials und mit unterschiedlicher Polarisationswirkung aufweist, wobei das flüssigkristalline Material der Motivschicht in einem ersten der motivbildenden Bereiche homogen orientiert ist, und in einem zweiten der motivbildenden Bereiche isotrop orientiert ist, so dass das von den beiden Bereichen gebildete Motiv insbesondere bei Betrachtung durch einen Polarisator erkennbar ist, und wobei das flüssigkristalline Material der Motivschicht in dem zweiten Bereich direkt über einer Anlöseschicht angeordnet ist, die von dem flüssigkristallinen Material angelöst wird und die Ausbildung einer flüssigkristallinen Phase in dem flüssigkristallinen Material verhindert.

2. Sicherheitselement nach Anspruch 1, **dadurch gekennzeichnet, dass** die motivbildenden Bereiche ein scharf begrenztes Motiv, insbesondere scharf begrenzte Muster, Zeichen oder Codierungen bilden.

3. Sicherheitselement nach Anspruch 1, **dadurch gekennzeichnet, dass** die Anlöseschicht strukturiert in Form eines Negativbilds des gewünschten Motivs aufgebracht ist.

4. Sicherheitselement nach Anspruch 3, **dadurch gekennzeichnet, dass** die Anlöseschicht als hochaufgelöstes Motivbild vorliegt und das flüssigkristalline Material der Motivschicht vollflächig über der Anlöseschicht angeordnet ist, oder die Anlöseschicht als hochaufgelöstes Motivbild vorliegt und das flüssigkristalline Material der Motivschicht mit niedriger Auflösung strukturiert und überlappend über der Anlöseschicht angeordnet ist.

5. Sicherheitselement nach wenigstens einem der Ansprüche 1 bis 4, **dadurch gekennzeichnet, dass** die flüssigkristalline Motivschicht mit einem metallischen Reflektor kombiniert ist, wobei der metallische Reflektor durch eine metallisierte Kunststofffolie gebildet ist oder der metallische Reflektor eine Beugungsstruktur, insbesondere ein Hologramm, umfasst.

6. Sicherheitselement nach wenigstens einem der Ansprüche 1 bis 5, **dadurch gekennzeichnet, dass** das flüssigkristalline Material der Motivschicht in dem ersten Bereich direkt über einer Kunststoff-Trägerfolie angeordnet ist, die eine Ausrichtungsschicht für das flüssigkristalline Material bildet.

7. Sicherheitselement nach wenigstens einem der Ansprüche 1 bis 6, **dadurch gekennzeichnet, dass** die Motivschicht einen dritten Bereich aufweist, in dem das flüssigkristalline Material ebenfalls homogen, aber unter einem Winkel zur Ausrichtung des ersten Bereichs orientiert ist und eine zum ersten Bereich unterschiedliche Polarisationswirkung aufweist, wobei das flüssigkristalline Material in dem dritten Bereich bevorzugt direkt über einer Ausrichtungsschicht angeordnet ist, die aus einem linearen Photopolymer, einer fein strukturierten Schicht oder einer durch Ausübung von Scherkräften ausgerichteten Schicht gebildet ist.

8. Sicherheitselement nach wenigstens einem der Ansprüche 1 bis 7, **dadurch gekennzeichnet, dass** die Motivschicht auf Basis eines nematischen flüssigkristallinen Materials gebildet ist, wobei die nematische flüssigkristalline Motivschicht bevorzugt mit einer cholesterischen Flüssigkristallschicht kombiniert ist.

9. Sicherheitselement nach wenigstens einem der Ansprüche 1 bis 7, **dadurch gekennzeichnet, dass** die Motivschicht auf Basis eines cholesterischen flüssigkristallinen Materials gebildet ist.

10. Verfahren zur Herstellung eines Sicherheitselements für Sicherheitspapiere, Wertdokumente und dergleichen, bei dem
auf eine Trägerfolie eine Motivschicht auf Basis eines flüssigkristallinen Materials aufgebracht wird, wobei das flüssigkristalline Material in zumindest zwei ein Motiv bildenden Bereichen mit unterschiedlicher Orientierung erzeugt wird,
das flüssigkristalline Material der Motivschicht in einem ersten der motivbildenden Bereiche mit homogener Orientierung erzeugt wird, und in einem zweiten der motivbildenden Bereiche mit isotroper Orientierung erzeugt wird, wobei in dem zweiten Bereich eine Anlöseschicht auf die Trägerfolie aufgebracht wird, die von dem flüssigkristallinen Material angelöst wird und die Ausbildung einer flüssigkristallinen Phase in dem flüssigkristallinen Material verhindert, und dass das flüssigkristalline Material in dem zweiten Bereich direkt auf die Anlöseschicht aufgebracht wird.

11. Verfahren nach Anspruch 10, **dadurch gekennzeichnet, dass** die motivbildenden Bereiche als ein scharf begrenztes Motiv, insbesondere als scharf begrenzte Muster, Zeichen oder Codierungen, erzeugt werden.

12. Sicherheitspapier für die Herstellung von Wertdokumenten oder dergleichen, das mit einem Sicherheitselement nach wenigstens einem der Ansprüche 1 bis 11 ausgestattet ist.

13. Datenträger, insbesondere Wertdokument, wie Banknote, Ausweiskarte oder dergleichen, der mit einem Sicherheitselement nach einem der Ansprüche 1 bis 11 ausgestattet ist.

## Claims

1. A security element for security papers, value documents and the like, having a motif layer, on the basis of a liquid crystal material, that exhibits at least two regions that form a motif, having different orientations of the liquid crystal material and having different polarization effects, the liquid crystal material of the motif layer being oriented homogeneously in a first of the motif-forming regions, and being oriented isotropically in a second of the motif-forming regions, such that the motif formed by the two regions is perceptible especially when viewed through a polarizer, and the liquid crystal material of the motif layer being arranged, in the second region, directly over a solubilization layer that is solubilized by the liquid crystal material and prevents the development of a liquid crystal phase in the liquid crystal material.

2. The security element according to claim 1, **characterized in that** the motif-forming regions form a sharply delimited motif, especially sharply delimited patterns, characters or codes.

3. The security element according to claim 1, **characterized in that** the solubilization layer is applied patterned in the form of a negative image of the desired motif.

4. The security element according to claim 3, **characterized in that** the solubilization layer is present as a high-resolution motif image and the liquid crystal material of the motif layer is arranged contiguously over the solubilization layer, or the solubilization layer is present as a high-resolution motif image and the liquid crystal material of the motif layer is patterned with low resolution and arranged overlapping over the solubilization layer.

5. The security element according to at least one of claims 1 to 4, **characterized in that** the liquid crystal motif layer is combined with a metallic reflector, the metallic reflector being formed by a metalized plastic foil, or the metallic reflector comprising a diffraction pattern, especially a hologram.

6. The security element according to at least one of claims 1 to 5, **characterized in that** the liquid crystal material of the motif layer in the first region is arranged directly over a plastic carrier foil that forms an alignment layer for the liquid crystal material.

7. The security element according to at least one of claims 1 to 6, **characterized in that** the motif layer exhibits a third region in which the liquid crystal material is likewise oriented homogeneously, but at an angle to the alignment of the first region, and exhibits a different polarization effect than the first region, the liquid crystal material in the third region preferably being arranged directly over an alignment layer that is formed from a linear photopolymer, a finely patterned layer or a layer that is aligned by the application of shear forces.

8. The security element according to at least one of claims 1 to 7, **characterized in that** the motif layer is formed on the basis of a nematic liquid crystal material, the nematic liquid crystal motif layer preferably being combined with a cholesteric liquid crystal layer.

9. The security element according to at least one of claims 1 to 7, **characterized in that** the motif layer is formed on the basis of a cholesteric liquid crystal material.

10. A method for manufacturing a security element for security papers, value documents and the like, in which
- a motif layer on the basis of a liquid crystal material is applied to a carrier foil, the liquid crystal material being produced in at least two regions that form a motif and that have different orientations,
- the liquid crystal material of the motif layer is produced in a first of the motif-forming regions having a homogeneous orientation, and in a second of the motif-forming regions having an isotropic orientation, there being applied to the carrier foil, in the second region, a solubilization layer that is solubilized by the liquid crystal material and prevents the development of a liquid crystal phase in the liquid crystal material, and in that, in the second region, the liquid crystal material is applied directly to the solubilization layer.

11. The method according to claim 10, **characterized in that** the motif-forming regions are produced as a sharply delimited motif, especially as sharply delimited patterns characters, or codes.

12. A security paper for manufacturing value documents or the like that is furnished with a security element according to at least one of claims 1 to 11.

13. A data carrier, especially a value document, such as a banknote, identification card or the like, that is furnished with a security element according to one of claims 1 to 11.

## Revendications

1. Elément de sécurité pour papiers de sécurité, documents de valeur et analogues, comportant une couche à motifs à base d'un matériau cristal liquide, qui comprend au moins deux domaines formant un motif, ayant des orientations différentes du matériau cristal liquide et ayant des effets de polarisation différents, le matériau cristal liquide de la couche à motifs étant orienté d'une manière homogène dans un premier des domaines formant un motif, et étant orienté d'une manière isotrope dans un deuxième des domaines formant un motif, de façon que le motif formé par les deux domaines puisse être reconnu par un polarisateur en particulier lors de son observation, le matériau cristal liquide de la couche à motifs étant, dans le deuxième domaine, directement disposé au-dessus d'une couche de solubilisation, qui est solubilisée par le matériau cristal liquide et qui empêche la formation d'une phase cristal liquide dans le matériau cristal liquide.

2. Elément de sécurité selon la revendication 1, **caractérisé en ce que** les domaines formant un motif forment un motif nettement délimité, en particulier des modèles, des caractères ou des codages nettement délimités.

3. Elément de sécurité selon la revendication 1, **caractérisé en ce que** la couche de solubilisation est appliquée d'une manière structurée sous forme d'une image négative du motif souhaité.

4. Elément de sécurité selon la revendication 3, **caractérisé en ce que** la couche de solubilisation se présente sous forme d'une image formant motif à haute résolution, et que le matériau cristal liquide de la couche à motifs est disposé en pleine surface au-dessus de la couche de solubilisation, ou **en ce que** la couche de solubilisation est présente sous forme d'une image formant motif à haute résolution, et que le matériau cristal liquide de la couche à motifs est disposé, avec une faible résolution, d'une manière structurée et en chevauchement au-dessus de la couche de solubilisation.

5. Elément de sécurité selon au moins l'une des revendications 1 à 4, **caractérisé en ce que** la couche à motifs cristalline liquide est combinée à un réflecteur métallique, le réflecteur métallique étant formé d'une feuille plastique métallisée, ou encore le réflecteur métallique comprenant une structure de diffraction, en particulier un hologramme.

6. Elément de sécurité selon au moins l'une des revendications 1 à 5, **caractérisé en ce que** le matériau cristal liquide de la couche à motifs est, dans le premier domaine, disposé directement au-dessus d'une feuille support plastique, qui forme une couche d'orientation pour le matériau cristal liquide.

7. Elément de sécurité selon au moins l'une des revendications 1 à 6, **caractérisé en ce que** la couche à motifs comprend un troisième domaine, dans lequel le matériau cristal liquide est orienté d'une manière elle aussi homogène, mais selon un certain angle par rapport à l'orientation du premier domaine, et comprend un effet de polarisation, différent de celui du premier domaine, le matériau cristal liquide du troisième domaine étant de préférence disposé directement au-dessus d'une couche d'orientation, qui est formée à partir d'un photopolymère linéaire, d'une couche finement structurée, ou d'une couche orientée sous l'effet de l'exercice de forces de cisaillement.

8. Elément de sécurité selon au moins l'une des revendications 1 à 7, **caractérisé en ce que** la couche à motifs est formée sur la base d'un matériau cristal liquide nématique, la couche à motifs cristalline liquide nématique étant de préférence combinée à une couche cristalline liquide cholestérique.

9. Elément de sécurité selon au moins l'une des revendications 1 à 7, **caractérisé en ce que** la couche à motifs est formée sur la base d'un matériau cristal liquide cholestérique.

10. Procédé de fabrication d'un élément de sécurité pour papiers de sécurité, documents de valeur et analogues, dans lequel
- on applique sur une feuille formant support une couche à motifs à base d'un matériau cristal liquide, le matériau cristal liquide étant produit dans au moins deux domaines formant un motif, ayant des orientations différentes,
- on produit le matériau cristal liquide de la couche à motifs dans un premier des domaines formant un motif, avec une orientation homogène, et, dans un deuxième des domaines formant un motif, on le produit avec une orientation isotrope, ce à l'occasion de quoi on applique dans le deuxième domaine une couche de solubilisation sur la feuille formant support, qui est solubilisée par le matériau cristal liquide, et qui empêche la formation d'une phase cristal liquide dans le matériau cristal liquide, et en ce que le matériau cristal liquide du deuxième domaine est directement appliqué sur la couche de solubilisation.

11. Procédé selon la revendication 10, **caractérisé en ce que** les domaines formant un motif sont produits sous forme d'un motif nettement délimité, en particulier sous forme de modèles, de caractères ou de codages nettement délimités.

12. Papier de sécurité pour la fabrication de documents de valeur ou analogues, qui est muni d'un élément de sécurité selon au moins l'une des revendications 1 à 11.

13. Support de données, en particulier document de valeur, tel qu'un billet de banque, une carte d'identité ou analogues, qui est muni d'un élément de sécurité selon l'une des revendications 1 à 11.
